# EUROPÄISCHE PATENTANMELDUNG

(11) **EP 1 300 485 A1**
(43) Veröffentlichungstag der Anmeldung: **09.04.2003**
(21) Anmeldenummer: 02021790.7
(22) Anmeldetag: 26.09.2002
(51) Int. Cl.: C23C 28/00

(54) **Kraftübertragende Oberflächenschicht und Verfahren zu ihrer Herstellung**

(30) Priorität: 04.10.2001 DE 10148831
(71) Anmelder: Wacker-Chemie GmbH, 81737 München (DE)
(72) Erfinder: Lukschandel, Jörg, 87439 Kempten (DE); Meyer, Jürgen, 87437 Kempten (DE); Haggenmüller, Wolfgang, 87435 Kempten (DE)
(74) Vertreter: Potten, Holger

(57) **Zusammenfassung**

Bauteiloberfläche 5, die mit reibungserhöhenden Partikeln 4 in einer Matrix 1 beschichtet ist, dadurch gekennzeichnet, dass die Matrix 1 eine obere und eine untere Schicht 3, 2 umfaßt, wobei die untere Schicht 2 eine für eine reibungserhöhende Fixierung übliche metallische Bindephase ist und die obere Schicht eine weitere metallische Bindephase mit einer Dicke von 40 bis 60 % des mittleren Durchmessers der Partikel 4 ist.

## Beschreibung

Die Erfindung betrifft eine kraftübertragende Oberflächenschicht und ein Verfahren zu ihrer Herstellung

Für die Übertragung von Kräften zwischen den einzelnen Komponenten bzw. Bauteilen einer Konstruktion werden häufig sog. kraftschlüssige Verbindungen eingesetzt. Bei diesen bestimmen die zwischen den zusammengefügten Bauteiloberflächen herrschenden Adhäsionskräfte das Ausmaß der übertragbaren Querkräfte. Der sog. Haftbeiwert µ (= Reibungskoeffizient) gibt an, welcher Anteil der vorhandenen Normalkraft noch als Querkraft in die Verbindung eingeleitet werden kann, bevor ein Durchrutschen eintritt. Bei trockener Verbindung von Stahloberflächen beträgt der Haftbeiwert µ etwa 0,15.

Ein höherer Haftbeiwert gestattet es, die Belastbarkeit bestehender Konstruktionen zu erhöhen oder bei gleicher Funktion eine leichtere Bauweise zu wählen. Diesen Bedürfnissen folgend, hat es zahlreiche Vorschläge gegeben, um die Adhäsion zwischen zu fügenden Bauteiloberflächen zu erhöhen. Wenn es sich um nicht lösbare Verbindungen handelt, die während der gesamten Lebensdauer der Konstruktion im gefügten Zustand verbleiben, ist das Einbringen von Fremdstoffen wie Kleber, Lote o.ä. in den Fügespalt eine bewährte Technik.

Lösbare Verbindungen, insbesondere Verschraubungen, Klemmeinrichtungen, Feststellbremsen o.ä., erlauben derartige Hilfsmittel nicht. In diesen Fällen wird häufig versucht, harte Partikel in den Fügespalt einzubringen, die durch teilweises Eindringen in die Bauteiloberflächen zu einem Mikro-Formschluß führen. Als besonders wirksam und reproduzierbar hat sich das beschichtungstechnische Aufbringen von partikeldurchsetzten Metallschichten auf eine der Fügeflächen erwiesen. Derartige reibungserhöhende Schichten sind z.B. in Leidlich et al., Antriebstechnik 38, No. 4 beschrieben. EP 961 038 A 1 beschreibt ein Verbindungselement, welches an beiden Oberflächen beschichtet ist und dort zum Einsatz kommt, wo eine direkte Beschichtung der Bauteiloberfläche nicht möglich ist. Die Herstellung dieser reibungserhöhenden Schichten erfolgt in Metallisierungsbädern mit darin dispergierten Feststoffpartikeln. Diesem Verfahren inhärent ist der kontinuierliche Einbau von Partikeln in die anwachsende Schicht, was dazu führt, daß die am Ende des Beschichtungsvorgangs eingebauten Partikel nur zum geringen Teil von Schichtmatrix umschlossen sind und daher keine feste Verankerung in dieser haben.

Bei der weiteren Handhabung derart beschichteter Bauteile kann es zu Ablösungen von nicht ausreichend verankerten Partikeln kommen. Bei Verwendung beispielsweise im Motorenbau ist dies dann völlig inakzeptabel, wenn sich der Einbauort im Ölraum befindet: Abgelöste Hartstoffpartikel, insbesondere die zumeist für kraftübertragende Beschichtungen eingesetzten Diamantkörner, würden über das Öl in Lager transportiert und dort zu vorzeitigem Verschleiß führen. Zur Lösung dieses Problems ist es grundsätzlich vorstellbar, die nicht ausreichend verankerten Partikel durch mechanische Bearbeitung schon vor der endgültigen Montage absichtlich zu entfernen. Dieses Vorgehen erweist sich aber in der Praxis als ungünstig bis funktionsschädlich für die dann verbleibende Oberfläche, weil diese durch unvermeidlichen Abrieb der Bearbeitungswerkzeuge verunreinigt bzw. verschmiert wird, was dann wiederum zu einer Beeinträchtigung der eigentlichen Kraftübertragungsfunktion einer derart behandelten beschichteten Oberfläche führt.

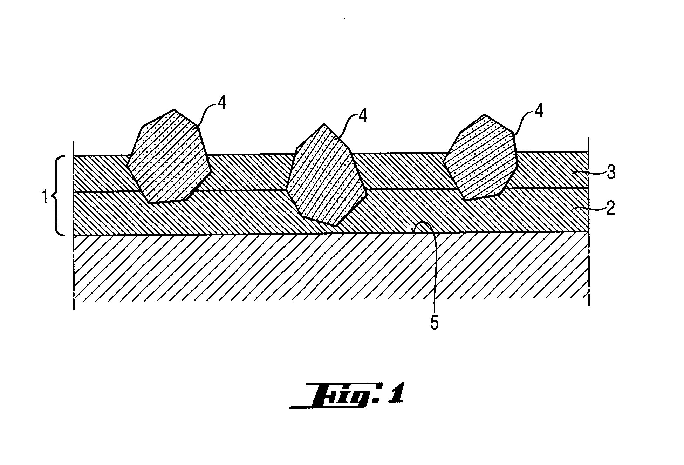

Aufgabe der Erfindung war es daher, eine mit reibungserhöhenden Partikeln in einer Matrix beschichtete Bauteiloberfläche 5 (Fig. 1) zur Verfügung zu stellen, welche nicht die genannten Probleme aufweist.

Die Aufgabe wird dadurch gelöst, dass die Matrix 1 eine obere und eine untere Schicht umfaßt, wobei die untere Schicht 2 eine für eine reibungserhöhende Fixierung übliche metallische Bindephase ist und die obere Schicht 3 eine weitere metallische Bindephase mit einer Dicke von 40 bis 60 % des mittleren Durchmessers der Partikel 4 (Fig. 1) ist.

Vorzugsweise besteht die Matrix aus diesen beiden Schichten.

Bei den Partikeln handelt es sich vorzugsweise um die für reibungserhöhende Beschichtungen üblichen Partikel, wie sie z.B. aus EP-A-0961038 S. 3, Zeilen 10 bis 20, bekannt sind. Besonders bevorzugt handelt es sich um Diamantkörner.

Die Partikel haben vorzugsweise einen mittleren Durchmesser von 5 µm bis 35 µm, besonders bevorzugt von 10 µm bis 25 µm.

Die untere Schicht ist vorzugsweise eine für reibungserhöhende Beschichtungen übliche metallische Bindephase wie sie aus den bereits genannten Schriften bekannt ist. Besonders bevorzugt handelt es sich um eine metallische Bindephase aus chemisch Nickel.

Die untere Schicht hat vorzugsweise eine Dicke von 5 bis 15 µm.

Die obere Schicht besteht vorzugsweise aus chemisch Nickel.

Die obere Schicht hat vorzugsweise eine Dicke von 5 bis 15 µm.

Besonders bevorzugt beträgt die Dicke der oberen Schicht die Hälfte des Partikeldurchmessers.

Der zweischichtige Aufbau der Matrix verankert die Hartstoffpartikel derart in der Matrix, daß ein Herauslösen der Partikel ausgeschlossen ist.

Die sichere Verankerung der Hartstoffpartikel in der Schichtmatrix wird durch Aufbringen einer zusätzlichen Metallschicht erzielt, die keine zur Kraftübertragung dienenden Partikel enthält. Da das Festhalten der Partikel rein mechanisch erfolgt und keine Adhäsions- oder sonstigen Bindungskräfte auftreten, müssen die zu sichernden Partikel mindestens bis zu ihrem Äquator von Matrixmaterial umgeben sein. Die zusätzlich aufzubringende Schicht ist daher so dick zu wählen, daß die kraftübertragenden Partikel mit nicht mehr als ihrem halben Durchmesser aus der neuen Matrixoberfläche herausragen.

Die erfindungsgemäße Oberfläche wird dadurch hergestellt, daß eine mittels eines im Stand der Technik üblichen Verfahrens mit einer reibungserhöhenden partikelhaltigen Beschichtung versehene Oberfläche mit einer zusätzlichen Beschichtung aus chemisch Nickel versehen wird. Diese zusätzliche Beschichtung wird vorzugsweise ebenfalls mittels eines aus dem Stand der Technik bekannten Verfahrens aufgebracht. Vorzugsweise ist dieses Bad völlig frei von Feststoffpartikeln. In manchen Fällen kann es jedoch auch zweckmäßig sein, darin wesentlich feinere Partikel vorzugsweise einer Korngröße von 1 bis 4 µm zu dispergieren, um die Festigkeitseigenschaften der zweiten Schicht gezielt zu beeinflussen. Die zu beschichtende Oberfläche kann die Oberfläche eines Bauteils sein, es kann sich jedoch ebenso um die Oberfläche einer federelastischen Folie handeln.

Um die Festigkeit der Matrix zu erhöhen, wird abschließend eine Wärmebehandlung durchgeführt. Die Wärmebehandlung findet vorzugsweise in einem Temperaturbereich von 150 bis 400 °C für einen Zeitraum von 1 bis 5 Stunden statt. Bei Temperaturen oberhalb 330°C findet bei Chemisch Nickelschichten ein Ausscheidungsvorgang von Ni₃P-Kristallen statt, der zu Druckeigenspannungen und einer Härtesteigerung führt. Diese Druckeigenspannungen der Matrix sind erwünscht, weil die eingelagerten Partikel dadurch fester gehalten werden.

Druckeigenspannungen entstehen in gewissem Umfang aber auch ohne Wärmebehandlung durch Dispersion feiner Feststoffpartikel in der Schicht, so daß bei anlaßempfindlichem Grundmaterial des zu beschichtenden Bauteils der gewünschte Verfestigungseffekt auch bei niedrigerer Aushärtetemperatur erzielt werden kann, wenn die obere Schicht als Dispersionsschicht mit feinen Partikeln ausgebildet ist. Diese feinen Partikel nehmen selbst nicht am Vorgang der Kraftübertragung teil.

Figur 1 zeigt schematisch den Aufbau einer erfindungsgemäßen Beschichtung.

Das folgende Beispiel dient der weiteren Erläuterung der Erfindung.

### Beispiel

Um den Schrumpfsitz eines Zahnrades auf einem Wellenzapfen zu verbessern, soll die Bohrung des Zahnrades mit einer reibungserhöhenden Beschichtung versehen werden. Der Wellenzapfen weist eine Rauhigkeit Rz = 8 µm auf. Als Beschichtung wird Chemisch Nickel mit eingelagerten Diamantpartikeln von 10 µm Korngröße spezifiziert.

Beim Fügen der im Ölraum eines Motors eingesetzten Schrumpfverbindung dürfen sich keine Diamantpartikel lösen, da diese vom Ölfilter nicht zuverlässig aufgefangen werden.

Zum Aufbringen der Beschichtung wird wie folgt vorgegangen: Der Verzahnungsbereich des Zahnrades wird nach den in der Galvanik üblichen Methoden durch eine Abdeckung vor dem Kontakt mit Behandlungschemikalien geschützt. Das Zahnrad wird auf einem rotierenden Träger befestigt und mit diesem in das Transportsystem einer Galvanikanlage eingehängt. Nach dem Durchlaufen der dem Galvanikfachmann bekannten werkstoffspezifischen Vorbehandlung (Entfetten, Beizen und Aktivieren) wird das Bauteil in das eigentliche Beschichtungsbad getaucht. Bei diesem handelt es sich um ein außenstromlos ("chemisch") arbeitendes Nickel-Hypophosphit-Bad, in dem Diamantpartikel von 10 µm Korngröße dispergiert sind. Eine Badbewegung durch Rühren, Umpumpen oder Lufteinblasen verhindert ein Aussedimentieren der Diamantpartikel.

Während des Beschichtungsvorgangs rotiert das zu beschichtende Bauteil, um das zufällige Absetzen der Diamantpartikel auf der gesamten zu beschichtenden Oberfläche (hier: der Bohrung) gleichmäßig zu ermöglichen. Die Abscheidung der Nickelschicht erfolgt orientierungsunabhängig auf allen exponierten Bauteiloberflächen. Das Zusammenspiel zwischen zufälligem Absetzen der Partikel auf periodisch nach oben weisenden Flächen und konstantem Aufwachsen der Nickelschicht bewirkt die Entstehung einer mit Partikeln durchsetzten Metallschicht. Dieser Vorgang setzt sich während der gesamten Tauchzeit fort, so daß es immer Partikel gibt, die eben erst von der aufwachsenden Metallschicht festgehalten werden, aber nur schwach in dieser verankert sind.

Das so beschichtete Bauteil wird aus dem Bad entnommen und zunächst mitsamt dem Träger mittels Ultraschall von lose aufsitzenden Partikeln befreit.

Sodann wird die Oberfläche der ersten Nickelmatrix des Bauteils erneut chemisch aktiviert und das Bauteil in ein zweites Beschichtungsbad getaucht, das vorzugsweise die selbe chemische Zusammensetzung aufweist wie das zur Erzeugung der ersten Schicht verwendete, aber keine Diamantpartikel von 10 µm Korngröße mehr enthält.

Die Tauchzeit in diesem zweiten Bad wird so bemessen, daß auf die ursprüngliche Schichtmatrix noch eine Deckschicht von 0.5 x dem Durchmesser der eingelagerten 10 µm-Diamantkörner, also 5 µm Dicke, aufwächst. Dies ist treffsicher möglich, weil die Abscheideraten von Chemisch-Nickel-Bädern bekannt und gut steuerbar sind.

Nach dem Entnehmen des Bauteils aus dem zweiten Beschichtungsbad sind alle zuvor auf der Oberfläche befindlichen Diamantpartikel von 10 µm Korngröße mindestens bis zu ihrem Äquator von der metallischen Matrix umschlossen.

Um die Festigkeit der Matrix zu erhöhen, wird abschließend eine Wärmebehandlung bei 350 °C für einen Zeitraum von 120 min. durchgeführt.

## Patentansprüche

1. Bauteiloberfläche, die mit reibungserhöhenden Partikeln in einer Matrix beschichtet ist, **dadurch gekennzeichnet, dass** die Matrix eine obere und eine untere Schicht umfaßt, wobei die untere Schicht eine für eine reibungserhöhende Fixierung übliche metallische Bindephase ist und die obere Schicht eine weitere metallische Bindephase mit einer Dicke von 40 bis 60 % des mittleren Durchmessers der Partikel ist.

2. Bauteiloberfläche nach Anspruch 1, **dadurch gekennzeichnet, daß** die reibungserhöhenden Partikel Diamantkörner sind.

3. Bauteiloberfläche nach Anspruch 1 oder 2, **dadurch gekennzeichnet, daß** die Partikel einen mittleren Durchmesser von 5 µm bis 35 µm, bevorzugt von 10 µm bis 25 µm haben.

4. Bauteiloberfläche nach einem der Ansprüche 1 bis 3, **dadurch gekennzeichnet, daß** die untere Schicht eine metallische Bindephase aus chemisch Nickel ist.

5. Bauteiloberfläche nach einem der Ansprüche 1 bis 3, **dadurch gekennzeichnet, daß** die untere Schicht eine Dicke von 5 bis 15 µm hat.

6. Bauteiloberfläche nach einem der Ansprüche 1 bis 4, **dadurch gekennzeichnet, daß** die obere Schicht aus chemisch Nickel besteht.

7. Bauteiloberfläche nach einem der Ansprüche 1 bis 4, **dadurch gekennzeichnet, daß** die obere Schicht eine Dicke, entsprechend der Hälfte des Partikeldurchmessers, besitzt.

8. Verfahren zur Herstellung einer Bauteiloberfläche gemäß einem oder mehreren der Ansprüche 1 bis 7, **dadurch gekennzeichnet, daß** eine mittels eines im Stand der Technik üblichen Verfahrens mit einer reibungserhöhenden partikelhaltigen Beschichtung versehene Oberfläche mit einer zusätzlichen Beschichtung aus chemisch Nickel versehen wird.

9. Verfahren nach Anspruch 8, **dadurch gekennzeichnet, daß** abschließend eine Wärmebehandlung in einem Temperaturbereich von 150 bis 400 °C für eine Zeitraum von 1 bis 5 Stunden stattfindet.
